# EUROPEAN PATENT APPLICATION

(11) **EP 3 349 077 A1**
(43) Date of publication of application: **18.07.2018**
(21) Application number: 17197340.7
(22) Date of filing: 19.10.2017
(51) Int. Cl.: G05B 13/02

(54) **CONTROL DEVICE, CONTROL METHOD, AND CONTROL PROGRAM**

(30) Priority: 11.01.2017 JP 2017002459
(71) Applicant: Omron Corporation, Kyoto-shi, Kyoto 600-8530 (JP)
(72) Inventor: YAMADA, Takaaki, Kyoto-shi, Kyoto 600-8530 (JP); TANAKA, Hitoshi, Kyoto-shi, Kyoto 600-8530 (JP); TSUBATA, Hajime, Kyoto-shi, Kyoto 600-8530 (JP); YAMAGUCHI, Shohei, Kyoto-shi, Kyoto 600-8530 (JP); HASUI, Ryosuke, Kyoto-shi, Kyoto 600-8530 (JP)
(74) Representative: Becker Kurig Straus

(57) **Abstract**

A temperature adjustment device 10 includes a PID calculation part 12 for calculating a PID value, a PID control part 14, and a determination part 15. The PID control part 14 performs PID control and calculate an amount of manipulation for a control target using the PID value, a target value of the control target, and an actually measured value of the control target. The determination part 15 determines whether or not to stop calculation of the PID value using a combination of the target value and the actually measured value or the PID value. This suppresses control performance degradation of PID control.

## Description

### BACKGROUND OF THE INVENTION

### Field of the Invention

The present invention relates to a technology for control such as temperature control or motor control of a target device.

### Description of Related Art

In the related art, PID control such as that shown in Patent Document 1 is often used for control devices in temperature adjusters or the like.

A PID control device includes a PID control part and a PID adjustment part as shown in Patent Document 1. The PID adjustment part calculates a PID value (including a proportional band P, an integral time TI, a derivative time Td, or the like) using adaptive control or auto-tuning and provides the calculated PID value to the PID control part.

The PID control part determines the amount of manipulation for a control target using the PID value, a target value of PID control, and a current value thereof.

The amount of manipulation is fed back to the PID adjustment part and the PID adjustment part recalculates and updates the PID value using the amount of manipulation and provides the resulting PID value to the PID control part.

### [Prior Art Document]

### [Patent Documents]

[Patent Document 1] Japanese Unexamined Patent Application Publication No. 2005-284828

### SUMMARY OF THE INVENTION

However, in the related-art PID control as described in Patent Document 1, an abnormality in the PID value or the like may degrade control performance of PID control.

Therefore, it is an object of the present invention to suppress control performance degradation of PID control.

A control device of the present invention includes a PID calculation part, a PID control part, and a determination part. The PID calculation part is configured to calculate a PID value. The PID control part is configured to perform PID control and calculate an amount of manipulation for a control target using the PID value, a target value of the control target, and an actually measured value of the control target. The determination part is configured to determine whether or not to stop calculation of the PID value using at least one of a combination of the target value and the actually measured value and the PID value.

In this configuration, an abnormality in PID control is detected using various values used for PID control.

In addition, in the control device of the present invention, when using the combination of the target value and the actually measured value, the determination part may be configured to calculate, from the target value and a reference operable value of the PID control, a prohibited region including a range of values closer to the target value than the reference operable value is to. The determination part may be configured to allow calculation of the PID value to be stopped upon detecting that an initial value of the actually measured value is within the prohibited region.

This configuration prevents an unstable operation of PID control due to the initial value of the actually measured value being close to the target value.

Further, in the control device of the present invention, the prohibited region may include a range equal to or greater than the target value.

This configuration prevents an unstable operation of PID control due to the initial value of the actually measured value being equal to or greater than the target value.

Furthermore, in the control device of the present invention, when using the combination of the target value and the actually measured value, the determination part may be configured to determine a first determination time from a dead time of the PID value and to calculate an amount of change of the actually measured value from the actually measured value at the first determination time and an initial value of the actually measured value. The determination part may be configured to allow calculation of the PID value to be stopped upon detecting that the amount of change of the actually measured value is less than a first threshold value for determination.

In this configuration, an abnormality in PID control is detected from no change in the actually measured value.

In addition, in the control device of the present invention, when using the combination of the target value and the actually measured value, the determination part may be configured to calculate an allowable range having the target value as a center value thereof from the target value and an initial value of the actually measured value. The determination part may be configured to determine a second determination time from a last time of time-series data which is used for calculation of the PID value by adaptive control. The determination part may be configured to allow calculation of the PID value to be stopped upon detecting that the actually measured value at the second determination time is not within the allowable range.

In this configuration, an abnormality in PID control is detected from the actually measured value after adaptive control.

Further, in the control device of the present invention, when using the PID value, the determination part may be configured to allow calculation of the PID value to be stopped upon detecting that any of a proportional band or an integral time of the PID value is less than a threshold value set for each of the proportional band or the integral time. For example, the threshold value is 0.

In this configuration, an abnormality in PID control is detected from the PID value.

Furthermore, in the control device of the present invention, when using the PID value, the determination part may be configured to calculate a difference between an initial value and a current value of the PID value. The determination part may be configured to allow calculation of the PID value to be stopped upon detecting that the difference is greater than a threshold value.

In this configuration, an abnormality in PID control is detected from an amount of change of the PID value.

According to the present invention, it is possible to suppress control performance degradation of PID control.

### BRIEF DESCRIPTION OF THE DRAWINGS

Fig. 1 is a functional block diagram of a temperature adjustment system including a temperature adjustment device according to a first embodiment of the present invention.
Fig. 2 is a flowchart showing a first method of determining whether or not to stop calculation of a PID value according to the present invention.
Fig. 3 is a diagram showing the concept of the first determination as to whether or not to stop calculation of a PID value according to the present invention.
Fig. 4 is a functional block diagram of a temperature adjustment system including a temperature adjustment device according to a second embodiment of the present invention.
Fig. 5 is a flowchart showing a second method of determining whether or not to stop calculation of a PID value according to the present invention.
Figs. 6A and 6B are diagrams showing the concept of the second determination as to whether or not to stop calculation of a PID value according to the present invention.
Fig. 7 is a flowchart showing a third method of determining whether or not to stop PID value calculation according to the present invention.
Figs. 8A and 8B are diagrams showing the concept of the third determination as to whether or not to stop PID value calculation according to the present invention.
Fig. 9 is a functional block diagram of a temperature adjustment system including a temperature adjustment device according to a fourth embodiment of the present invention.
Fig. 10 is a flowchart showing a fourth method of determining whether or not to stop PID value calculation according to the present invention.
Fig. 11 is a flowchart showing a fifth method of determining whether or not to stop PID value calculation according to the present invention.

### DESCRIPTION OF THE EMBODIMENTS

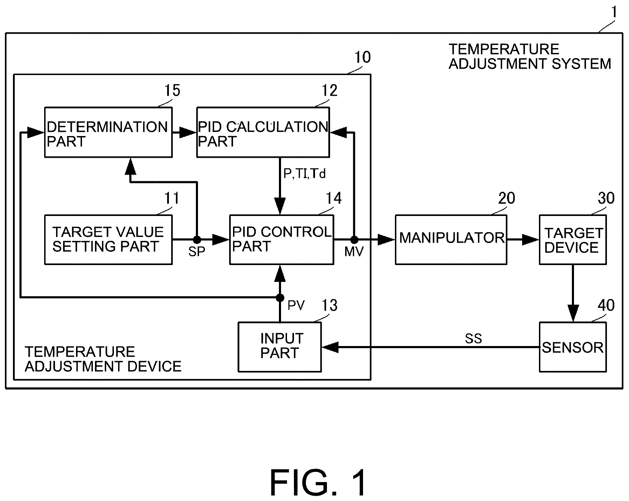

A control device, a control method, and a control program according to a first embodiment of the present invention will be described with reference to the drawings. In the following embodiments, the case of temperature adjustment (temperature control) of a heater or the like is shown as a specific example of control, but the present invention is also applicable to control of other physical quantities such as rotation control of a motor or the like. Fig. 1 is a functional block diagram of a temperature adjustment system including a temperature adjustment device according to the first embodiment of the present invention.

As shown in Fig. 1, the temperature adjustment device 10 includes a target value setting part 11, a PID calculation part 12, an input part 13, a PID control part 14, and a determination part 15. The temperature adjustment device 10 corresponds to the "control device" of the present invention.

As shown in Fig. 1, the temperature adjustment device 10 is a component of the temperature adjustment system 1. The temperature adjustment system 1 includes the temperature adjustment device 10, a manipulator 20, a target device 30, and a sensor 40. The target device 30 includes, for example, a heater (not shown). Thus, in this case, the control target is the temperature at a predetermined position on the target device 30. The manipulator 20 is, for example, an SSR, an electromagnetic switch, or a power regulator. The manipulator 20 operates according to an amount of manipulation MV from the temperature adjustment device 10 to control application of current to the heater of the target device 30. The sensor 40 is, for example, a thermocouple or the like and measures the temperature of the target device 30 and outputs measurement data SS. The measurement data SS is input to the input part 13 of the temperature adjustment device 10.

Next, details of the temperature adjustment device 10 will be described.

The input part 13 calculates an actually measured value PV from the measurement data SS. The actually measured value PV is a value in the same units as a target value SP which will be described later. For example, if the target value SP is in degrees Celsius (°C), the actually measured value PV is also in degrees Celsius (°C).

The target value setting part 11 sets the target value SP. The target value SP is set by an operator or the like. A stored target value SP may also be used when the target value setting part 11 includes a means for storing the target value SP. The target value SP is, for example, a temperature. The target value setting part 11 outputs the target value SP to the PID control part 14 and the determination part 15.

The PID calculation part 12 performs auto-tuning such as a limit cycle method and sets a PID value from temperature waveform information. The PID value includes a proportional band P, an integral time TI, and a derivative time Td. Specifically, the PID calculation part 12 calculates a dead time L from a limit cycle period Tc. The PID calculation part 12 calculates the integral time TI and the derivative time Td from the dead time L. Further, the PID calculation part 12 calculates the proportional band P from the amplitude of the limit cycle. When an amount of manipulation MV is output from the PID control part 14, the PID calculation part 12 calculates a PID value by adaptive control using the amount of manipulation MV. The PID calculation part 12 provides the calculated PID value to the PID control part 14.

The input part 13 outputs the calculated PV to the PID control part 14 and the determination part 15.

The PID control part 14 calculates the amount of manipulation MV by performing known PID control calculation using the PID value, the target value SP, and the actually measured value PV. The PID control part 14 outputs the amount of manipulation MV to the manipulator 20.

The PID control part 14 includes a digital filter. Thus, more specifically, the target value SP and the actually measured value PV are input to the PID control part 14 through an analog/digital (A/D) converter (not shown) and the amount of manipulation MV is output to the manipulator 20 through a digital/analog (D/A) converter (not shown).

The determination part 15 determines whether or not to stop calculation of the PID value by the following method using the target value SP and the actually measured value PV and performs a stopping control operation for allowing the PID calculation part 12 to stop calculation of the PID value.

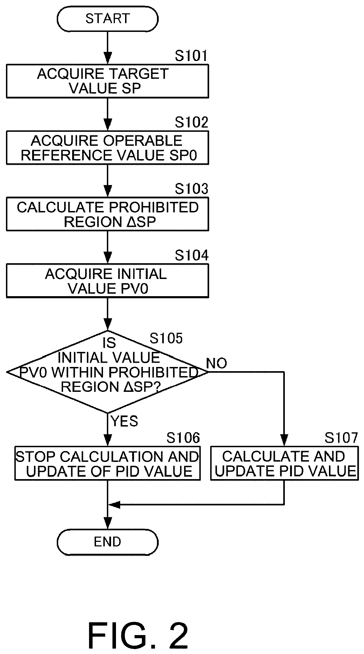

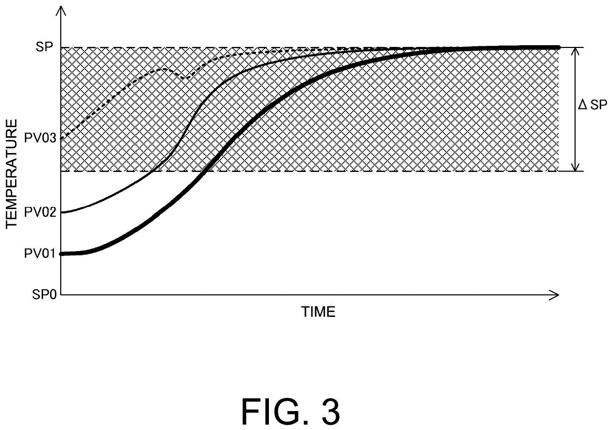

Fig. 2 is a flowchart showing a first method of determining whether or not to stop calculation of a PID value according to the present invention. Fig. 3 is a diagram showing the concept of the first determination as to whether or not to stop calculation of a PID value according to the present invention. In Fig. 3, the horizontal axis represents time and the vertical axis represents temperature.

The determination part 15 acquires a target value SP for control (S101).

The determination part 15 acquires a reference operable value SPO of the temperature adjustment device 10 (S102). As shown in Fig. 3, the reference operable value SPO is a lowest value of the initial value (in this case, a lowest temperature) that can be set when the temperature adjustment device 10 performs PID control.

The determination part 15 sets a prohibited region ΔSP using the target value SP and the reference operable value SPO (S103). As shown in Fig. 3, the width (in this case, the temperature width) of the prohibited region ΔSP is set on the basis of the difference between the target value SP and the reference operable value SPO. Specifically, for example, the width of the prohibited region ΔSP is set to 1/2 of the difference between the target value SP and the reference operable value SPO. The higher boundary value of the prohibited region ΔSP is the target value SP.

The determination part 15 acquires an initial value PVO of the actually measured value PV (S104).

Upon detecting that the initial value PVO is within the prohibited region ΔSP (S105: YES), the determination part 15 allows calculation and update of the PID value to be stopped (SI06). Upon detecting that the initial value PVO is not within the prohibited region ΔSP (S105: NO), the determination part 15 allows calculation and update of the PID value to be performed (S107).

In the case of the initial values PV01 and PV02, the determination part 15 allows calculation and update of the PID value to be performed since the initial values PV01 and PV02 are not within the prohibited region ΔSP. On the other hand, in the case of the initial value PV03, calculation of the PID value is not performed since the initial value PV03 is within the prohibited region ΔSP. That is, considering the characteristics of PID control that PID control is unstable when the initial value PVO is close to the target value SP such that the initial value PVO is within a predetermined range from the target value SP, calculation of the PID value is not performed in that case. This can suppress control performance degradation of PID control.

The prohibited region ΔSP may include a temperature range equal to or higher than the target value SP. When the initial value PVO is equal to or higher than the target value SP, the amount of manipulation MV is 0 and adaptive control fails to be performed correctly. Therefore, inclusion of initial values PVO equal to or higher than the target value SP within the prohibited region ΔSP prevents an unstable operation of PID control.

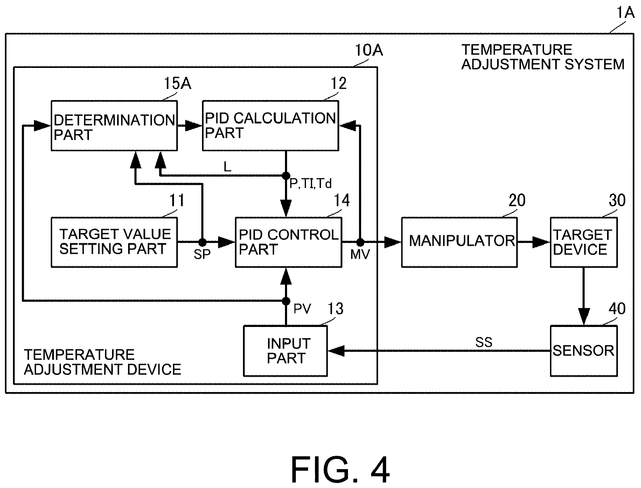

Next, a control device, a control method, and a control program according to a second embodiment of the present invention will be described with reference to the drawings. Fig. 4 is a functional block diagram of a temperature adjustment system including a temperature adjustment device according to the second embodiment of the present invention.

As shown in Fig. 4, a temperature adjustment system 1A differs from the temperature adjustment system 1 according to the first embodiment in terms of the process of a determination part 15A of a temperature adjustment device 10A. Other configurations and processes of the temperature adjustment system 1A and the temperature adjustment device 10A are similar to those of the temperature adjustment system 1 and the temperature adjustment device 10 and descriptions of similar parts will be omitted.

As shown in Fig. 4, a dead time L is input from the PID calculation part 12 to the determination part 15A.

The determination part 15A determines whether or not to stop calculation of the PID value by the following method using the dead time L and the actually measured value PV and performs a stopping control operation for allowing the PID calculation part 12 to stop calculation of the PID value.

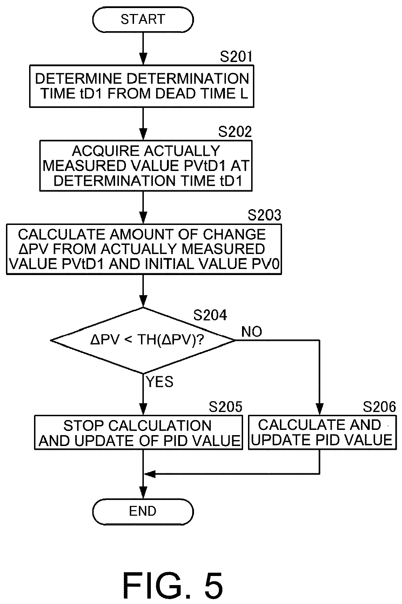

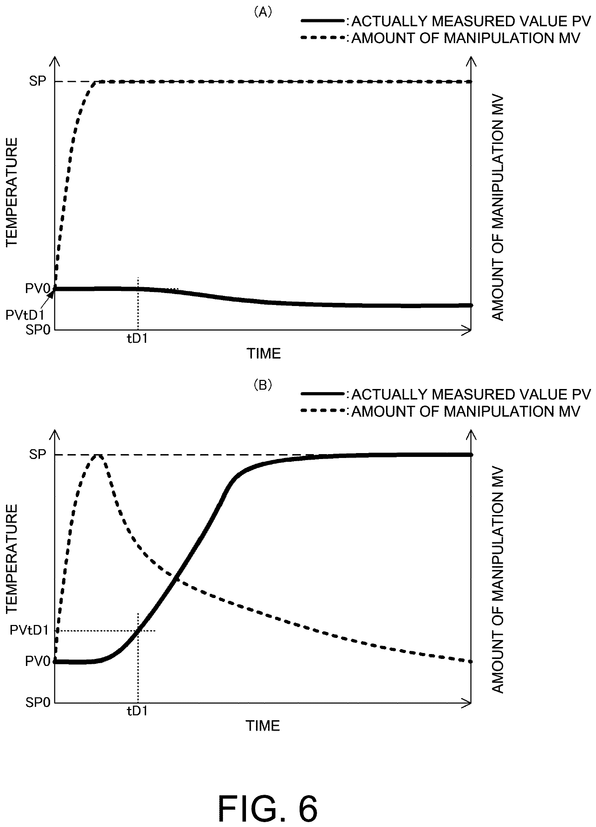

Fig. 5 is a flowchart showing a second method of determining whether or not to stop calculation of a PID value according to the present invention. Figs. 6A and 6B are diagrams showing the concept of the second determination as to whether or not to stop calculation of a PID value according to the present invention. Fig. 6A shows an abnormal case and Fig. 6B shows a normal case. In Figs. 6A and 6B, the horizontal axis represents time and the vertical axes represent temperature and an amount of manipulation MV.

The determination part 15A determines a determination time tD1 from a dead time L (S201). Specifically, for example, the determination time tD1 is twice the dead time L (2L). The determination time tD1 only needs to be longer than the dead time L and is preferably shorter than the last time of time series data used for calculating the PID value by adaptive control (a final time for adaptive control). The final time for adaptive control may be determined with reference to a stabilization time. The final time for adaptive control and the stabilization time can be obtained by previous experiment or simulation of when PID control is performed normally.

The determination part 15A acquires an actually measured value PVtD1 at the determination time tD1 (S202). The determination part 15A calculates an amount of change ΔPV from the actually measured value PVtD1 and an initial value PVO (S203). That is, ΔPV = PVtD1 - PVO.

The determination part 15A stores a threshold value of the amount of change TH(ΔPV) in advance and compares the amount of change ΔPV with the threshold value of the amount of change TH(ΔPV). The threshold value of the amount of change TH(ΔPV) is determined on the basis of a value when PID control is performed normally according to the specifications or the like of the temperature adjustment device 10A and the temperature adjustment system 1A.

Upon detecting that the amount of change ΔPV is smaller than the threshold value of the amount of change TH(ΔPV) (ΔPV < TH(ΔPV)) (S204: YES), the determination part 15A allows calculation and update of the PID value to be stopped (S205). Upon detecting that the amount of change ΔPV is equal to or greater than the threshold value of the amount of change TH(ΔPV) (S204: NO), the determination part 15A allows calculation and update of the PID value to be performed (S206).

For example, when PID control is abnormal such that the actually measured value PVtD1 and the initial value PVO are substantially the same as shown in Fig. 6A, the amount of change ΔPV is smaller than the threshold value of the amount of change TH(ΔPV) and therefore calculation and update of the PID value is not performed. On the other hand, when PID control is normal such that the difference between the actually measured value PVtD1 and the initial value PVO is great as shown in Fig. 6B, the amount of change ΔPV is equal to or greater than the threshold value of the amount of change TH(ΔPV) and therefore calculation and update of the PID value is performed.

As a result, it is possible to suppress control degradation due to an abnormality in PID control.

Next, a control device, a control method, and a control program according to a third embodiment of the present invention will be described with reference to the drawings.

A temperature adjustment system and a temperature adjustment device according to the present embodiment are the same as the temperature adjustment system 1A and the temperature adjustment device 10A in terms of the connection configuration of the components thereof but are different therefrom in terms of data input to the determination part 15A and the determination process performed by the determination part 15A. Other configurations and processes are similar and descriptions of similar parts will be omitted.

A target value SP, an initial value PVO, and a final time for adaptive control are input to the determination part 15A. The final time for adaptive control is the last time of the time series data used for calculating the PID value by adaptive control as described above. The final time for adaptive control may be determined with reference to the stabilization time and the final time for adaptive control and the stabilization time can be obtained by previous experiment or simulation of when PID control is performed normally.

The determination part 15A determines whether or not to stop calculation of the PID value by the following method using the target value SP, the initial value PVO, and the final time for adaptive control and performs a stopping control operation for allowing the PID calculation part 12 to stop calculation of the PID value.

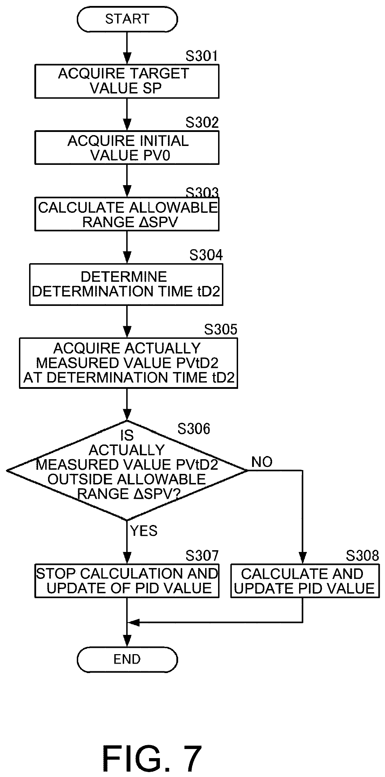

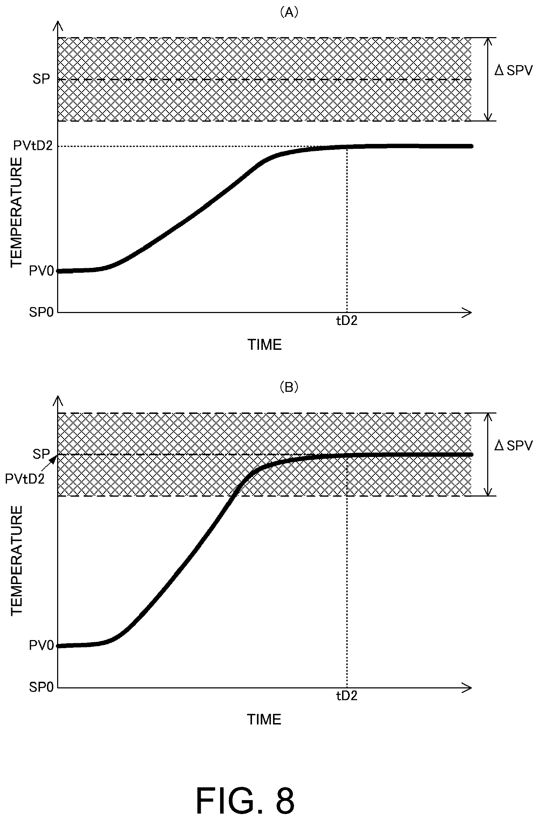

Fig. 7 is a flowchart showing a third method of determining whether or not to stop PID value calculation according to the present invention. Figs. 8A and 8B are diagrams showing the concept of the third determination as to whether or not to stop PID value calculation according to the present invention. Fig. 8A shows an abnormal case and Fig. 8B shows a normal case. In Figs. 8A and 8B, the horizontal axis represents time and the vertical axis represents temperature.

The determination part 15A acquires a target value SP (S301). The determination part 15A acquires an initial value PVO (S302). The determination part 15 calculates an allowable range ΔSPV using the target value SP and the initial value PVO (S303). More specifically, the determination part 15A calculates a difference value (SP - PVO) between the target value SP and the initial value PVO and calculates the allowable range ΔSPV by multiplying the difference value (SP - PVO) by 0.4. Here, the determination part 15A sets the center value of the allowable range ΔSPV as the target value SP.

The factor by which the difference value (SP - PVO) is multiplied is not limited to 0.4 and may be appropriately set to a predetermined value of 0.1 to 0.6 or the like according to the control accuracy of PID control. The center value of the allowable range ΔSPV and the target value SP need not be equal and it is only required that at least the target value SP be within the allowable range ΔSPV. However, it is preferable that the center value of the allowable range ΔSPV and the target value SP be equal.

The determination part 15A determines a determination time tD2 corresponding to the final time for adaptive control (S304). Specifically, for example, it is preferable that the determination time tD2 be longer than the final time for adaptive control and be as short as possible.

The determination part 15A acquires an actually measured value PVtD2 at the determination time tD2 (S305). Then, the determination part 15A compares the actually measured value PVtD2 with the allowable range ΔSPV.

Upon detecting that the actually measured value PVtD2 is outside the allowable range ΔSPV (S306: YES), the determination part 15A allows calculation and update of the PID value to be stopped (S307). Upon detecting that the actually measured value PVtD2 is within the allowable range ΔSPV (S306: NO), the determination part 15A allows calculation and update of the PID value to be performed (S308).

For example, when PID control is abnormal such that the actually measured value PVtD2 is outside the allowable range ΔSPV as shown in Fig. 8A, calculation and update of the PID value is not performed. On the other hand, when PID control is normal such that the actually measured value PVtD2 is within the allowable range ΔSPV as shown in Fig. 8B, calculation and update of the PID value is performed.

As a result, it is possible to suppress control degradation due to an abnormality in PID control.

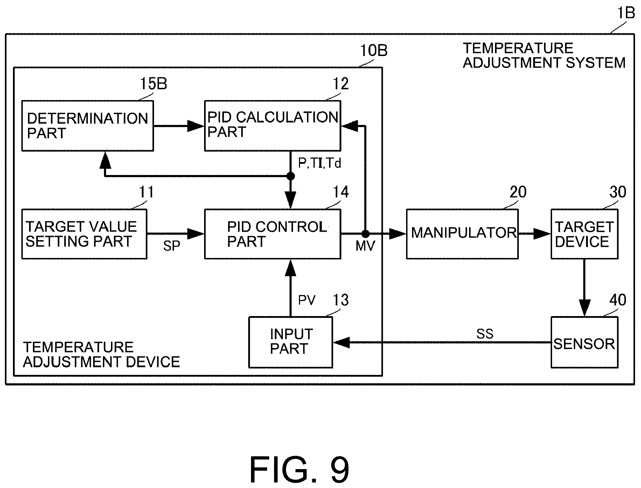

Next, a control device, a control method, and a control program according to a fourth embodiment of the present invention will be described with reference to the drawings. Fig. 9 is a functional block diagram of a temperature adjustment system including a temperature adjustment device according to the fourth embodiment of the present invention.

As shown in Fig. 9, a temperature adjustment system 1B differs from the temperature adjustment system 1A according to the second embodiment in terms of the process of a determination part 15B of a temperature adjustment device 10B. In addition, a target value SP and an actually measured value PV are not input to the determination part 15B and data input from the PID calculation part 12 to the determination part 15B is different from that of the temperature adjustment device 10A. Other configurations and processes of the temperature adjustment system 1B and the temperature adjustment device 10B are similar to those of the temperature adjustment system 1A and the temperature adjustment device 10A and descriptions of similar parts will be omitted.

As shown in Fig. 9, a PID value is input from the PID calculation part 12 to the determination part 15B. Specifically, a proportional band P and an integral time TI are input to the determination part 15B.

The determination part 15B determines whether or not to stop calculation of the PID value by the following method using the PID value (including the proportional band P and the integral time TI) and performs a stopping control operation for allowing the PID calculation part 12 to stop calculation of the PID value.

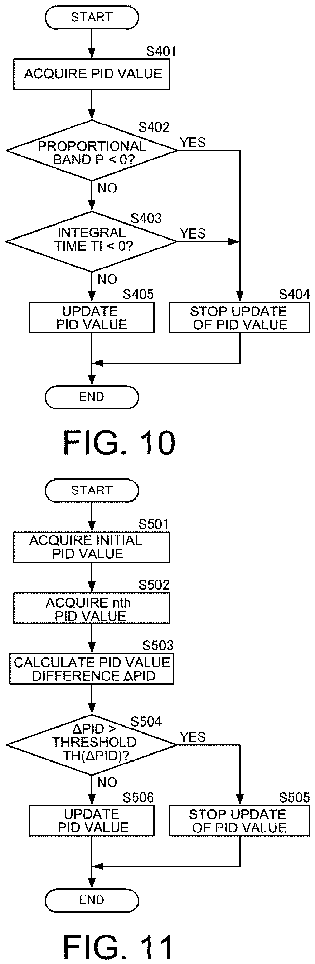

Fig. 10 is a flowchart showing a fourth method of determining whether or not to stop PID value calculation according to the present invention.

The determination part 15B acquires a PID value (including a proportional band P and an integral time TI) (S401). The determination part 15B also sets a threshold value of the proportional band P and a threshold value of the integral time TI. In the present embodiment, the threshold value of the proportional band P and the threshold value of the integral time TI are zero. Each of the threshold values of the proportional band P and the integral time TI can be set appropriately.

Upon detecting that the proportional band P is smaller than 0 (P < 0) (S402: YES), the determination part 15B allows update of the PID value to be stopped (S404). Upon detecting that the proportional band P is equal to or greater than 0 (P ≥ 0) (S402: NO), the process proceeds to determination based on the integral time TI.

Upon detecting that the integral time TI is smaller than 0 (TI < 0) (S403: YES), the determination part 15B allows update of the PID value to be stopped (S404). Upon detecting that the integral time TI is equal to or greater than 0 (TI ≥ 0) (S403: NO), the determination part 15B allows calculation and update of the PID value to be performed (S405).

That is, upon detecting that the proportional band P or the integral time TI is an abnormal value, the determination part 15B allows update of the PID value to be stopped. As a result, it is possible to suppress control degradation due to an abnormality in PID control.

Next, a control device, a control method, and a control program according to a fifth embodiment of the present invention will be described with reference to the drawings. A temperature adjustment system and a temperature adjustment device according to the present embodiment have the same configurations as the temperature adjustment system and the temperature adjustment device according to the fourth embodiment, and only the determination process of the determination part is different from that of the fourth embodiment. Descriptions of similar parts will be omitted below.

The determination part determines whether or not to stop calculation of the PID value by the following method using the PID value (including the proportional band P and the integral time TI) and performs a stopping control operation for allowing the PID calculation part 12 to stop calculation of the PID value.

Fig. 11 is a flowchart showing a fifth method of determining whether or not to stop PID value calculation according to the present invention.

The determination part acquires an initial PID value (including a proportional band P and an integral time TI) (S501). Thereafter, the temperature adjustment device starts and repeats PID control.

The determination part acquires a PID value at an nth ordinal position, that is, an nth PID value (where n is an integer of 2 or greater) (S502).

The determination part calculates a difference value ΔPID between the nth PID value and the initial PID value (S503).

The determination part stores a threshold value of the amount of PID change TH(ΔPID) in advance and compares the difference value ΔPID with the threshold value of the amount of PID change TH(ΔPID). The threshold value of the amount of PID change TH(ΔPID) is determined on the basis of a value when PID control is performed normally according to the specifications or the like of the temperature adjustment device and the temperature adjustment system.

Upon detecting that the difference value ΔPID is greater than the threshold value of the amount of PID change TH(ΔPID) ((ΔPID > TH((ΔPID)) (S504: YES), the determination part allows update of the PID value to be stopped (S505). Upon detecting that the difference value ΔPID is equal to or less than the threshold value of the amount of PID change TH(ΔPID) (S504: NO), the determination part allows calculation and update of the PID value to be performed (S506).

That is, upon detecting that the proportional band P or the integral time TI has changed abnormally, the determination part allows update of the PID value to be stopped. As a result, it is possible to suppress control degradation due to an abnormal change in the PID value.

The cases in which each determination method is performed singly is shown in the above description, but a plurality of determination methods may also be combined. For example, a determination method using a combination of a target value and an actually measured value and a determination method using a PID value may be combined.

PID control has been described as an example in the above description, but the present invention can also be applied to substantial PI control. That is, it is possible to perform setting to eliminate the influence of the derivative term of PID control.

### REFERENCE NUMERALS

1, 1A, 1B TEMPERATURE ADJUSTMENT SYSTEM
10, 10A. 10B TEMPERATURE ADJUSTMENT DEVICE
11 TARGET VALUE SETTING PART
12 PID CALCULATION PART
13 INPUT PART
14 PID CONTROL PART
15, 15A, 15B DETERMINATION PART
20 MANIPULATOR
30 TARGET DEVICE
40 SENSOR
L TIME
S101∼S506 STEP
SP TARGET VALUE
SPO REFERENCE OPERABLE VALUE
SS MEASUREMENT DATA
PV ACTUALLY MEASURED VALUE
PV01∼PV03 INITIAL VALUE
MV AMOUNT OF MANIPULATION
P PROPORTIONAL BAND
PVtD1, PVtD2 ACTUALLY MEASURED VALUE
Tc LIMIT CYCLE PERIOD
TI INTEGRAL TIME
Td DERIVATIVE TIME
tD1 DETERMINATION TIME
tD2 DETERMINATION TIME
ΔSP PROHIBITED REGION

## Claims

1. A control device (1, 1A, 1B) comprising:
a PID calculation part (12) configured to calculate a PID value;
a PID control part (14) configured to perform PID control and calculate an amount of manipulation (MV) for a control target using the PID value, a target value (SP) of the control target, and an actually measured value (PV, PVtD1, PVtD2) of the control target; and
a determination part (15, 15A, 15B) configured to determine whether or not to stop calculation of the PID value using at least one of a combination of the target value (SP) and the actually measured value (PV, PVtD1, PVtD2) and the PID value.

2. The control device (1, 1A, 1B) according to claim 1, wherein, when using the combination of the target value (SP) and the actually measured value (PV, PVtD1, PVtD2), the determination part (15, 15A, 15B) is configured to calculate, from the target value (SP) and a reference operable value (SPO) of the PID control, a prohibited region (ΔSP) including a range of values closer to the target value (SP) than the reference operable value (SPO) is to, and to allow calculation of the PID value to be stopped upon detecting that an initial value (PV01-PV03) of the actually measured value (PV, PVtD1, PVtD2) is within the prohibited region (ΔSP).

3. The control device (1, 1A, 1B) according to claim 2, wherein the prohibited region (ΔSP) includes a range equal to or greater than the target value (SP).

4. The control device (1, 1A, 1B) according to claim 1, wherein, when using the combination of the target value (SP) and the actually measured value (PV, PVtD1, PVtD2), the determination part (15, 15A, 15B) is configured to determine a first determination time from a dead time of the PID value, to calculate an amount of change of the actually measured value (PV, PVtD1, PVtD2) from the actually measured value (PV, PVtD1, PVtD2) at the first determination time and an initial value (PV01-PV03) of the actually measured value (PV, PVtD1, PVtD2), and to allow calculation of the PID value to be stopped upon detecting that the amount of change of the actually measured value (PV, PVtD1, PVtD2) is less than a first threshold value for determination.

5. The control device (1, 1A, 1B) according to claim 1, wherein, when using the combination of the target value (SP) and the actually measured value (PV, PVtD1, PVtD2), the determination part (15, 15A, 15B) is configured to calculate an allowable range having the target value (SP) as a center value thereof from the target value (SP) and an initial value (PV01-PV03) of the actually measured value (PV, PVtD1, PVtD2), to determine a second determination time from a last time of time-series data which is used for calculation of the PID value by adaptive control, and to allow calculation of the PID value to be stopped upon detecting that the actually measured value (PV, PVtD1, PVtD2) at the second determination time is not within the allowable range.

6. The control device (1, 1A, 1B) according to any one of claims 1 to 5, wherein, when using the PID value, the determination part (15, 15A, 15B) is configured to allow calculation of the PID value to be stopped upon detecting that any of a proportional band (P) or an integral time (TI) of the PID value is less than a threshold value set for each of the proportional band (P) or the integral time (TI).

7. The control device (1, 1A, 1B) according to claim 6, wherein the threshold value is 0.

8. The control device (1, 1A, 1B) according to any one of claims 1 to 5, wherein, when using the PID value, the determination part (15, 15A, 15B) is configured to calculate a difference between an initial value (PV01-PV03) and a current value of the PID value and to allow calculation of the PID value to be stopped upon detecting that the difference is greater than a threshold value.

9. A control method allowing a control device (1, 1A, 1B) to:
calculate a PID value;
perform PID and calculate an amount of manipulation (MV) for a control target control using the PID value, a target value (SP) of the control target, and an actually measured value (PV, PVtD1, PVtD2) of the control target; and
determine whether or not to stop calculation of the PID value using at least one of a combination of the target value (SP) and the actually measured value (PV, PVtD1, PVtD2) and the PID value.

10. A control program causing a control device (1, 1A, 1B) to perform:
a process of calculating a PID value;
a process of performing PID control and calculating an amount of manipulation (MV) for a control target using the PID value, a target value (SP) of the control target, and an actually measured value (PV, PVtD1, PVtD2) of the control target; and
a process of determining whether or not to stop calculation of the PID value using at least one of a combination of the target value (SP) and the actually measured value (PV, PVtD1, PVtD2) and the PID value.
